# EUROPEAN PATENT APPLICATION

(11) **EP 4 822 111 A1**
(43) Date of publication of application: **14.10.2026**
(21) Application number: 26168154.8
(22) Date of filing: 26.03.2026
(51) Int. Cl.: E04C 5/07, B29C 70/52

(54) **FRP REBAR FORMING APPARATUS**

(30) Priority: 07.04.2025 JP 2025063294
(71) Applicant: Tsudakoma Kogyo Kabushiki Kaisha, Kanazawa-shi, Ishikawa-ken 921-8650 (JP)
(72) Inventor: NISHIMURA, Isao, Kanazawa-shi, 921-8650 (JP); YAMAMURA, Koji, Kanazawa-shi, 921-8650 (JP); IWATA, Toshiharu, Kanazawa-shi, 921-8650 (JP)
(74) Representative: Zimmermann & Partner Patentanwälte mbB

(57) **Abstract**

An FRP rebar forming apparatus (1) includes: a drawing-and-twisting device (3) and a drive control device (80). The drawing-and-drawing-and-twisting device (3) includes a plurality of drawing mechanisms (30) aligned in a drawing direction of a reinforcing fiber bundles (7). Each drawing mechanism includes: a gripping device (40) for gripping an FRP rebar; a rotational drive device (50) for supporting the gripping device and rotationally driving the gripping device in a twisting direction of the reinforcing fiber bundles; and a reciprocating drive device (60) for reciprocating the rotational drive device along the drawing direction. The drive control device (80) for controlling driving of each device in each of the drawing mechanisms (30) is configured to control driving of each reciprocating drive device such that forward movement in the drawing direction of the gripping device (40) rotating while gripping the FRP rebar (8) is started in a predetermined order.

## Description

### TECHNICAL FIELD

The present invention relates to an FRP rebar forming apparatus for forming an FRP rebar from a plurality of reinforcing fiber bundles, the FRP rebar forming apparatus including a drawing-and-twisting device configured to draw a plurality of reinforcing fiber bundles impregnated with a thermoplastic resin in a resin bath out of the resin bath while twisting the reinforcing fiber bundles, and a drive control device configured to control driving of the drawing-and-twisting device.

### BACKGROUND ART

Recently, FRP rebars, which are reinforcing bars (rod-shaped reinforcing members) used for reinforcing concrete and the like, have attracted attention because they are lighter in weight, extremely high in strength, and superior in durability as compared with steel rebars of the related art. In addition, as such FRP rebars, those including a plurality of reinforcing fiber bundles such as carbon fiber bundles and basalt fiber bundles and formed by impregnating the plurality of reinforcing fiber bundles with a thermoplastic resin are known.

As an FRP rebar forming apparatus that forms an FRP rebar by impregnating a plurality of reinforcing fiber bundles with a thermoplastic resin in such a manner, there is an apparatus disclosed in Patent Literature 1. The apparatus disclosed in Patent Literature 1 is an apparatus that forms an FRP rebar by drawing a plurality of reinforcing fiber bundles (reinforcing fiber material) impregnated with a thermoplastic resin in a resin bath (immersion tank) out of the resin bath and cooling the drawn reinforcing fiber bundles. Therefore, the FRP rebar forming apparatus includes, on a downstream side of the resin bath, a drawing device for drawing the reinforcing fiber bundles out of the resin bath.

However, in the FRP rebar forming apparatus disclosed in Patent Literature 1, the drawing device for drawing the reinforcing fiber bundles out of the resin bath is merely a device that only draws (pulls) the reinforcing fiber bundles while clamping the reinforcing fiber bundles with belts. Therefore, the reinforcing fiber bundles drawn out of the resin bath are in a state of being merely bundled (gathered together) at an outlet of the resin bath. In contrast, in forming an FRP rebar, it is known that an FRP rebar having higher strength can be obtained by twisting and intertwining the plurality of reinforcing fiber bundles in a bundled state.

Note that, although it is an apparatus for manufacturing a strand (a reinforcing fiber bundle composed of a plurality of reinforcing fibers), an apparatus including a drawing-and-twisting device that draws out a plurality of reinforcing fibers impregnated with a resin material while twisting the plurality of reinforcing fibers so as to intertwine the fibers is disclosed in Patent Literature 2. The drawing-and-twisting device disclosed in Patent Literature 2 includes a pair of twisting rollers provided such that their axial directions intersect with each other, and the pair of rollers clamps a bundle of reinforcing fibers and is rotationally driven in opposite directions, thereby feeding (drawing out of the resin bath) the reinforcing fiber bundle while twisting the reinforcing fiber bundle. In addition, in the apparatus disclosed in Patent Literature 2, a pair of pulling rollers is provided downstream of the twisting rollers (drawing-and-twisting device) so as to draw the reinforcing fiber bundle out of the twisting rollers.

### CITATION LIST

### PATENT LITERATURE

Patent Literature 1: JP2022-104567A
Patent Literature 2: JPH05-169445A

Incidentally, the drawing-and-twisting device disclosed in Patent Literature 2 clamps the reinforcing fiber bundle by the twisting rollers as described above, and feeds the reinforcing fiber bundle to the downstream side while imparting rotation to the reinforcing fiber bundle. Therefore, in such an apparatus, the reinforcing fiber bundle is likely to slide relative to the twisting rollers in a rotational direction and/or a feeding direction. When sliding occurs between the reinforcing fiber bundle and the twisting rollers, a problem arises in that the reinforcing fiber bundle is damaged due to the sliding (friction).

Further, in the apparatus disclosed in Patent Literature 2, the pulling rollers are provided downstream of the drawing-and-twisting device (twisting rollers) so as to draw the reinforcing fiber bundle out of the twisting rollers, as described above. However, in such a configuration, it is difficult to precisely match a feeding speed of the twisting rollers that also impart rotation and a feeding speed of the pulling rollers that perform only the feeding (pulling), and therefore, due to the mismatch in the feeding speeds, sliding with the twisting rollers as described above becomes more severe, or sliding occurs between the pulling rollers as well. As a result, the reinforcing fiber bundle suffers greater damage.

### SUMMARY

In view of the above circumstances, an object of the present invention is to provide an FRP rebar forming apparatus including a drawing-and-twisting device configured to draw a plurality of reinforcing fiber bundles impregnated with a thermoplastic resin in a resin bath out of the resin bath while twisting the reinforcing fiber bundles, wherein the drawing-and-twisting device is configured such that the reinforcing fiber bundles are not damaged due to sliding as described above.

The present invention relates to an FRP rebar forming apparatus for forming an FRP rebar from a plurality of reinforcing fiber bundles, the FRP rebar forming apparatus including a drawing-and-twisting device configured to draw a plurality of reinforcing fiber bundles impregnated with a thermoplastic resin in a resin bath out of the resin bath while twisting the reinforcing fiber bundles, and a drive control device configured to control driving of the drawing-and-twisting device.

In addition, in order to achieve the above object, the present invention provides, in the above FRP rebar forming apparatus, the drawing-and-twisting device including a plurality of drawing mechanisms aligned in a drawing direction of the reinforcing fiber bundles. Each of the drawing mechanisms includes a gripping device configured to be switchable between a gripping state in which an FRP rebar is gripped and a non-gripping state in which the gripping state is released, a rotational drive device configured to support the gripping device and to rotationally drive the gripping device in a twisting direction of the reinforcing fiber bundles, and a reciprocating drive device configured to reciprocate the rotational drive device along the drawing direction. In addition, the drive control device is configured to control driving of each device in each of the drawing mechanisms such that, when the gripping device switched to the gripping state is rotationally driven by the rotational drive device, forward movement driving of the rotational drive device by the reciprocating drive device is performed, and to control driving of each of the reciprocating drive devices such that forward movement driving by each of the reciprocating drive devices is started in a predetermined order.

The "predetermined order" referred to herein is an order set such that forward movement driving by the same reciprocating drive device is not performed in succession. In other words, the order is set such that the reciprocating drive devices that perform forward movement driving in succession are different reciprocating drive devices.

In the FRP rebar forming apparatus according to the present invention, each drawing mechanism includes the gripping device that grips an FRP rebar, and the rotational drive device that rotationally drives the gripping device, and the FRP rebar forming apparatus is configured such that the rotational drive device rotationally drives the gripping device in the gripping state. As a result, twisting (rotation) of the FRP rebar is performed without sliding in the rotational direction between the FRP rebar and the gripping device in direct contact with the FRP rebar. Further, each drawing mechanism includes the reciprocating drive device that moves the gripping device forward in the drawing direction for each rotational drive device, and drawing of the FRP rebar (reinforcing fiber bundles) is performed by forward movement of the gripping device in the gripping state, that is, drawing of the FRP rebar is performed without sliding occurring in the drawing direction between the FRP rebar and the gripping device.

In this way, according to the FRP rebar forming apparatus of the present invention, twisting and drawing of the FRP rebar (reinforcing fiber bundles) by each drawing mechanism is performed without sliding occurring in the rotational direction and the drawing direction between the FRP rebar and the gripping device. Therefore, the drawing-and-twisting device including the drawing mechanism does not cause damage to the FRP rebar (reinforcing fiber bundles) by sliding.

Note that, since the drawing mechanism performs the drawing operation for drawing out the FRP rebar by moving the gripping device in the gripping state forward from its initial position as described above, in order for the drawing mechanism to perform the drawing operation again, a return operation for returning the gripping device to the initial position by switching the gripping device to the non-gripping state and then moving it backward is required. During a period in which the return operation is performed, as a matter of course, the drawing operation by the drawing mechanism is not performed. That is, the drawing operation by one drawing mechanism is performed intermittently, leaving a period during which a drawing operation is not performed.

In contrast, in the FRP rebar forming apparatus according to the present invention, the plurality of drawing mechanisms are provided so as to be aligned in the drawing direction, and the FRP rebar forming apparatus is configured such that forward movement of the gripping device by the reciprocating drive device in each drawing mechanism is started in a predetermined order. According to the configuration, it is possible to start a drawing operation by another drawing mechanism before the return operation by one drawing mechanism is ended. Accordingly, according to the configuration, since the period during which the drawing operation is not performed by any drawing mechanism can be shortened, drawing of the FRP rebar by the drawing-and-twisting device can be performed more efficiently.

### BRIEF DESCRIPTION OF DRAWINGS

FIG. 1 is a schematic side view showing one embodiment of an FRP rebar forming apparatus according to the present invention.
FIG. 2 is a side cross-sectional view showing a resin bath of FIG. 1.
FIG. 3 is a side view showing a drawing mechanism of a drawing-and-twisting device of FIG. 1.
FIG. 4 is a front view showing the drawing mechanism of FIG. 3, as viewed from an upstream side.
FIG. 5 is a side view showing the drawing-and-twisting device of FIG. 1.
FIG. 6 is a block diagram of a drive control device that controls driving of the drawing-and-twisting device of FIG. 5.

### DESCRIPTION OF EMBODIMENTS

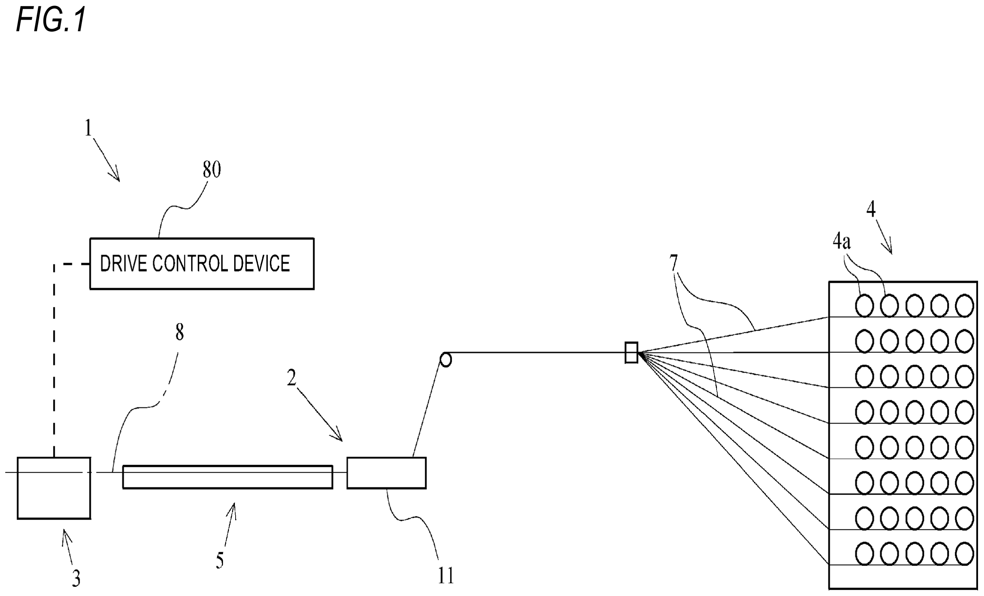

Hereinafter, one embodiment (embodiment) of an FRP bar forming apparatus according to the present invention will be described based on FIGS. 1 to 6.

As shown in FIG. 1, an FRP rebar forming apparatus 1 includes an impregnation device 2 into which reinforcing fiber bundles 7 are introduced and which impregnates the reinforcing fiber bundles 7 with a thermoplastic resin, and a drawing-and-twisting device 3 provided downstream of the impregnation device 2 with respect to a travel path of the reinforcing fiber bundles 7 and configured to draw (pull) the reinforcing fiber bundles 7 out of the impregnation device 2 while twisting the reinforcing fiber bundles.

Note that the reinforcing fiber bundles 7 are supplied from a supply device 4 provided upstream of the FRP rebar forming apparatus 1 (impregnation device 2) with respect to the travel path. In addition, the supply device 4 is configured such that a plurality of material rolls 4a formed by winding the reinforcing fiber bundles 7 into a roll shape are mounted thereto. The plurality of reinforcing fiber bundles 7 drawn (supplied) out of the supply device 4 are introduced into the impregnation device 2 of the FRP rebar forming apparatus 1.

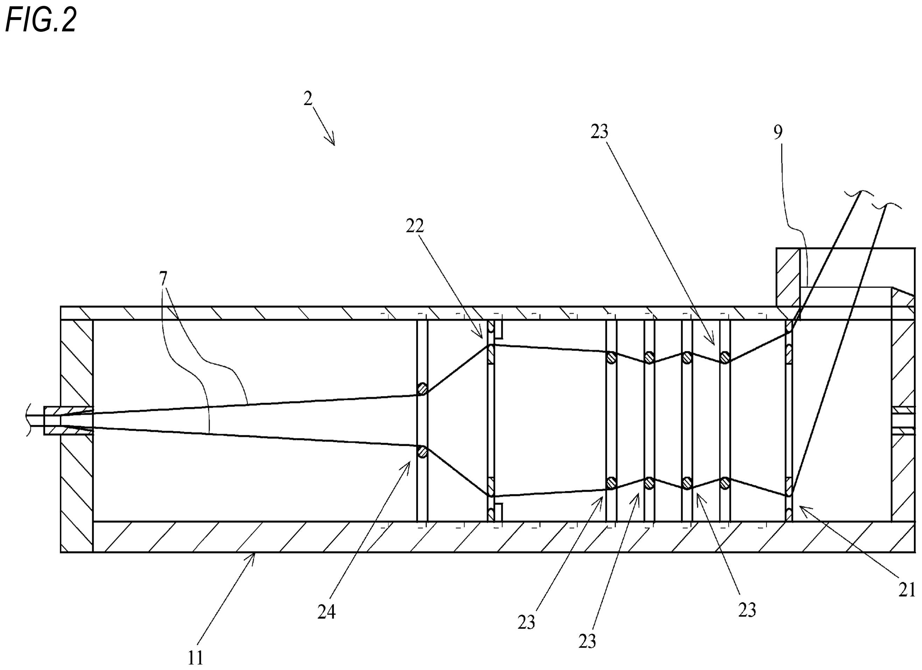

In addition, the impregnation device 2 includes a resin bath in which a thermoplastic resin is stored, in order to impregnate the reinforcing fiber bundles 7 with the thermoplastic resin as described above. FIG. 2 shows an example thereof, and a resin bath 11 includes therein a pair of plate-shaped guide plates 21 and 22 arranged at an interval along the travel path. Both guide plates 21 and 22 have the same configuration and have a plurality of through holes for guiding the reinforcing fiber bundles 7, the plurality of through holes being formed so as to be positioned on a circle drawn with a center of the guide plates 21 and 22. The plurality of reinforcing fiber bundles 7 introduced into the resin bath 11 are guided in such a manner as to be separately inserted through the plurality of through holes of both guide plates 21 and 22. Therefore, within the resin bath 11, the plurality of reinforcing fiber bundles 7 are aligned and guided on the circle.

In addition, within the resin bath 11, four ring-shaped guide members 23 are provided between the pair of guide plates 21 and 22 so as to be aligned in the direction of the travel path. The guide members 23 are provided for applying a fiber-opening action to the reinforcing fiber bundles 7 guided as described above to enhance impregnation. Each reinforcing fiber bundle 7 is guided, in order from the upstream-side guide member 23, by an inner circumferential surface, an outer circumferential surface, an inner circumferential surface, and an outer circumferential surface. In addition, on a downstream side of the downstream-side guide plate 22, a ring-shaped guide member 24 having a smaller diameter than that of the guide member 23 is provided. Each reinforcing fiber bundle 7 that has passed through the downstream-side guide plate 22 is guided by the guide member 24 at a position closer to the center.

Each reinforcing fiber bundle 7 guided within the resin bath 11 in such a manner is pulled by the drawing-and-twisting device 3 provided on the downstream side of the resin bath 11, advances along its guide path within the resin bath 11, and is drawn out of the resin bath 11 in a converged state at a discharge portion of the resin bath 11. In addition, the drawing-and-twisting device 3 twists each reinforcing fiber bundle 7 so as to intertwine the plurality of reinforcing fiber bundles 7, and the twisting action extends to the vicinity of the downstream-side guide plate 22 within the resin bath 11. As a result, the plurality of reinforcing fiber bundles 7 drawn out of the resin bath 11 are intertwined.

Note that a cooling device 5 that cools the plurality of reinforcing fiber bundles 7 impregnated with resin by passing through the resin bath 11 and drawn out of the resin bath 11 in an intertwined state as described above is provided between the resin bath 11 and the drawing-and-twisting device 3. As a result, the plurality of reinforcing fiber bundles 7 drawn out of the resin bath 11 in the state as described above are cooled in the cooling device 5 and formed as an FRP rebar 8.

In the FRP rebar forming apparatus 1 as described above, in the present invention, the drawing-and-twisting device 3 includes a plurality of drawing mechanisms aligned in a drawing direction of the reinforcing fiber bundles 7. In addition, each drawing mechanism includes a gripping device that grips the FRP rebar 8, a rotational drive device that supports the gripping device and rotationally drives the gripping device in a twisting direction of the reinforcing fiber bundles 7, and a reciprocating drive device that reciprocates the rotational drive device along the drawing direction. Further, the drive control device that controls driving of each device in each drawing mechanism is configured to control driving of each reciprocating drive device such that forward movement of the gripping device, which rotates while gripping the FRP rebar, in the drawing direction is started in a predetermined order. One embodiment (embodiment) of such an FRP rebar forming apparatus 1 will be described in detail below based on the drawings. In the following example, it is assumed that the number of drawing mechanisms in the drawing-and-twisting device 3 is two.

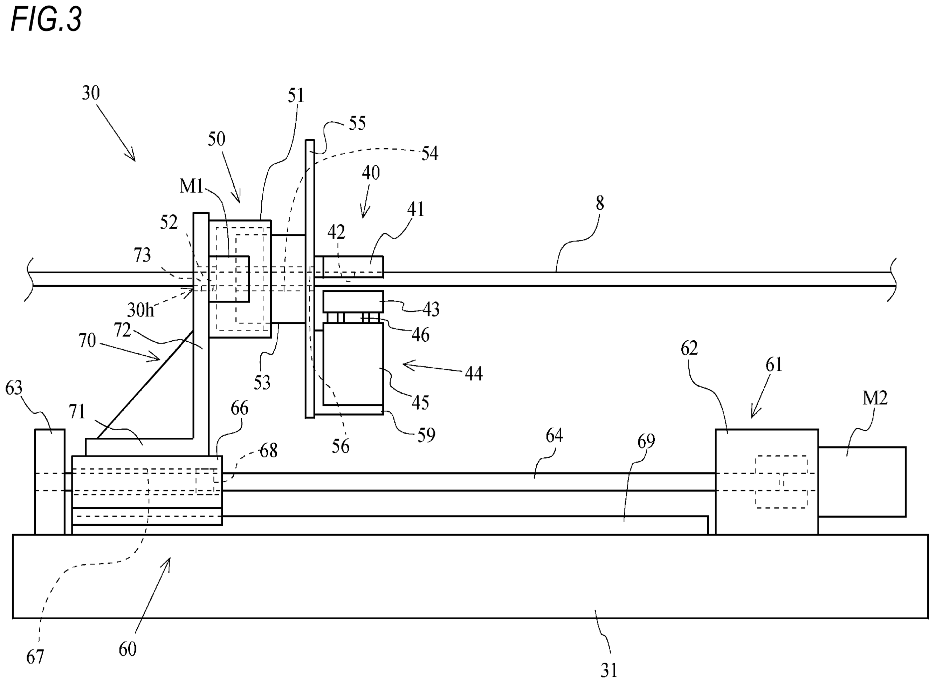

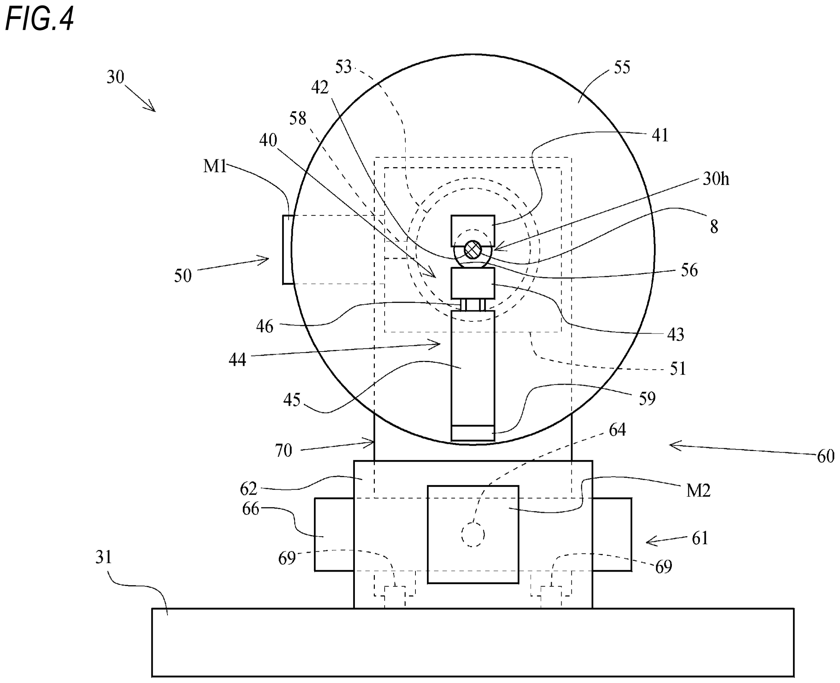

First, with respect to each drawing mechanism in the drawing-and-twisting device 3, as shown in FIGS. 3 and 4, each drawing mechanism 30 includes a gripping device 40 that grips the FRP rebar 8, a rotational drive device 50 that supports the gripping device 40 and rotationally drives the gripping device 40, and a reciprocating drive device 60 that reciprocates the rotational drive device 50 along the drawing direction. Among these, the gripping device 40 includes a pair of gripping members 41 and 43 for gripping the FRP rebar 8. One of both gripping members 41 and 43 is provided as a fixed gripping member that is fixedly arranged.

On the other hand, the other of both gripping members 41 and 43 is provided as a movable gripping member that is driven to advance and retract with respect to the fixed gripping member 41. Specifically, the gripping device 40 includes a gripping member drive device 44 for causing the pair of gripping members 41 and 43 to perform a gripping operation. The other gripping member 43 is provided in a manner supported by the gripping member drive device 44. Note that, in the present embodiment, the gripping member drive device 44 uses an air cylinder 45 as a driving means. In addition, the gripping member 43 is provided in a manner attached to a leading end of a piston rod 46 of the air cylinder 45.

As a result, the gripping member 43 is configured as a movable gripping member that is driven to advance and retract with respect to the fixed gripping member 41 as the piston rod 46 of the air cylinder 45 in the gripping member drive device 44 is driven to advance and retract. In each drawing mechanism 30, the movable gripping member 43 is driven to advance and retract with respect to the fixed gripping member 41 in such a manner, thereby gripping and releasing the FRP rebar 8.

Note that each of the gripping members 41 and 43 is a block-shaped member having a substantially rectangular parallelepiped shape. In addition, the fixed gripping member 41 has, on an opposing surface facing the movable gripping member 43, a semicircular groove 42 sized to accommodate approximately half of the FRP rebar 8. That is, a gripping surface of the fixed gripping member 41 is an arc-shaped surface to which the FRP rebar 8 is fitted. In addition, as described below, the fixedly arranged fixed gripping member 41 is provided at a position such that the FRP rebar 8 comes into sliding contact with an inner surface of the groove 42 when the FRP rebar 8 is present on the travel path. Therefore, a position (standby position) of the movable gripping member 43 when the piston rod 46 is retracted, which is a position at which gripping of the FRP rebar 8 is released, is set at a position at which the movable gripping member 43 is spaced apart from the gripping surface of the fixed gripping member 41 by a distance greater than a diameter of the FRP rebar 8.

In addition, the FRP rebar 8 is gripped by the fixed gripping member 41 and the movable gripping member 43 in the state in which the piston rod 46 is advanced as described above, but the position (gripping position) of the movable gripping member 43 at that time is set such that a gripping force acting on the FRP rebar 8 by the gripping is of a magnitude at which relative movement of the FRP rebar 8 with respect to both gripping members 41 and 43 does not occur as much as possible, and at which excessive deformation is not caused to the FRP rebar 8.

The gripping member 40 configured as described above is provided in a manner supported by the rotational drive device 50. The rotational drive device 50 is configured to include a housing 51, a rotating shaft 53 rotatably supported with respect to the housing 51, an attachment plate 55 attached to the rotating shaft 53, the gripping device 40 being attached to the attachment plate 55, and a servo motor M1 serving as a drive source.

With respect to the rotational drive device 50, the housing 51 is formed as a housing having a substantially rectangular parallelepiped shape. The rotating shaft 53 is rotatably supported by a bearing (not shown) within the housing 51. In addition, the rotating shaft 53 is provided such that a portion on one end side thereof protrudes from a side surface of the housing 51.

In addition, the attachment plate 55 is formed as a member having a disk shape. The attachment plate 55 is attached, at its plate surface, to an end surface on the one end side of the rotating shaft 53. In addition, the attachment is performed such that, when viewed in an axial direction of the rotating shaft 53 (in a plate thickness direction of the attachment plate 55), a center of the plate surface of the attachment plate 55 coincides with an axis of the rotating shaft 53.

In addition, the servo motor M1 is attached to a side surface orthogonal to the side surface (front surface) of the housing 51 from which the rotating shaft 53 protrudes. However, the servo motor M1 is provided with an output shaft 58 oriented toward the rotating shaft 53, and as a result, the output shaft 58 is inserted into the housing 51. Additionally, the servo motor M1 is connected to the rotating shaft 53 at the output shaft 58 via a bevel gear (not shown).

The gripping device 40 is attached to a plate surface (attachment surface) of the attachment plate 55 of the rotational drive device 50 configured as described above, on a side opposite to the rotating shaft 53 side. Specifically, the fixed gripping member 41 and the air cylinder 45 of the gripping member drive device 44 of the gripping device 40 are attached to the attachment surface of the attachment plate 55 of the rotational drive device 50, so that the gripping device 40 is attached to the attachment plate 55, that is, is supported by the rotational drive device 50.

Note that the fixed gripping member 41 is directly fixed to the attachment plate 55. In addition, the attachment position is such that, when viewed in the plate thickness direction, the center of the arc of the groove 42 in the fixed gripping member 41 coincides with a center of the attachment surface of the attachment plate 55. Additionally, an L-shaped bracket 59 is attached to the attachment surface of the attachment plate 55. Additionally, the air cylinder 45 is fixed with the air cylinder 45 placed on the bracket 59, and is thereby fixed to the attachment plate 55.

In addition, in the rotational drive device 50, through holes 56 and 54 sized to allow insertion of the FRP rebar 8 are formed at centers of the attachment plate 55 and the rotating shaft 53. That is, through holes 56 and 54 for inserting the FRP rebar 8 are formed in the attachment plate 55 and the rotating shaft 53 so as to be continuous with the groove 42 of the fixed gripping member 41 of the gripping device 40 in the plate thickness direction (the axial direction). Further, the housing 51 has, on a side surface (rear surface) opposite to the front surface, a through hole 52 for inserting the FRP rebar 8, the through hole 52 having the same size as the through hole 54 of the rotating shaft 53 (the through hole 56 of the attachment plate 55) and being formed to open at the same position as the through hole 54 of the rotating shaft 53 when viewed in the axial direction.

The rotational drive device 50 that supports the gripping device 40 as described above is provided in a manner supported by the reciprocating drive device 60 for reciprocating the gripping device 40 and the rotational drive device 50 along the drawing direction. The reciprocating drive device 60 is configured to include a drive mechanism 61 for driving the rotational drive device 50 to advance and retract along the drawing direction, and a support bracket 70 for supporting the rotational drive device 50 on the drive mechanism 61.

Note that the drawing mechanism 30 includes a support table 31 as a base, and the reciprocating drive device 60 is provided on the support table 31. Specifically, the support table 31 is formed as a plate-shaped member having a rectangular upper surface, a dimension in a long-side direction thereof being sufficiently larger than a dimension in a short-side direction. The support table 31 is fixedly arranged immediately below the travel path, with the long-side direction oriented parallel to the travel path. In addition, the reciprocating drive device 60 is provided in a manner placed on the support table 31 in the drive mechanism 61.

With respect to the drive mechanism 61, more specifically, the drive mechanism 61 in the present embodiment is configured as a so-called ball-screw mechanism. With respect to the ball-screw mechanism 61, a pair of support members 62 and 63 is provided on the support table 31 at an interval in the long-side direction. A screw shaft 64 of the ball-screw mechanism 61 is rotatably supported at both end portions by the pair of support members 62 and 63. Additionally, a servo motor M2 serving as a drive source is connected to one end of the screw shaft 64. Note that the servo motor M2 is provided in a manner attached to the support member 62 supporting an end portion on the one end side of the screw shaft 64.

Further, a base member 66 that is driven to advance and retract along the drawing direction as the screw shaft 64 is rotationally driven in forward and reverse directions by the servo motor M2 is connected to the screw shaft 64. In addition, the base member 66 is formed as a plate-shaped member having a rectangular end surface. Note that a pair of rails 69 and 69 is provided on the support table 31, with the rails oriented parallel to the drawing direction (the axial direction of the screw shaft 64). In addition, the pair of rails 69 and 69 is provided extending between the two support members 62 and 63. The base member 66 is provided so as to be displaceable only in a direction along the drawing direction, in a manner guided by the pair of rails 69 and 69.

Further, the base member 66 has a through hole 67 formed to penetrate in the short-side direction of the end face. However, the through hole 67 is formed as a hole having an inner diameter larger than a diameter of the screw shaft 64 of the ball-screw mechanism 61. In addition, the through hole 67 is formed at a position such that the screw shaft 64 passes through the through hole 67 when the base member 66 is provided on the rails 69. In other words, when the base member 66 is provided on the rails 69, the screw shaft 64 of the ball-screw mechanism 61 passes through the through hole 67 in the base member 66. Additionally, a nut 68 is fixed within the through hole 67 in a fitted state, and is screwed onto the screw shaft 64. As a result, when the screw shaft 64 is rotationally driven in the forward and reverse directions by the servo motor M2, the ball screw mechanism 61 advances and retracts the base member 66 along the drawing direction.

In addition, the support bracket 70 is configured to include, as a main body, an L-shaped portion when viewed from a side, and a reinforcing rib provided on an inner side of the L-shaped portion. The support bracket 70 is fixed to the base member 66 by a fixing member such as a bolt, with a portion 71 on one end side with respect to a bent portion of the L-shaped portion being placed on the base member 66. However, the support bracket 70 is provided such that an outer surface of a portion 72 on the other end side with respect to the bent portion is oriented toward the upstream side in the travel path.

The rotational drive device 50 is attached to the outer surface of the portion 72 on the other end side of the support bracket 70. However, the attachment is performed in such a manner that the rear surface of the housing 51 of the rotational drive device 50 is brought into contact with the outer surface of the support bracket 70. When the rotational drive device 50 is attached to the support bracket 70 in such a manner, the rotational drive device 50 (and the gripping device 40) is supported on the ball-screw mechanism 61 by the support bracket 70. That is, the support bracket 70 is configured as a member for supporting the rotational drive device 50 (and the gripping device 40) on the ball-screw mechanism 61.

In addition, the support bracket 70, when placed (fixed) on the base member 66 as described above, has a height dimension such that an upper end edge of the portion 72 on the other end side is positioned higher than the travel path. In addition, the attachment position of the rotational drive device 50 to the support bracket 70 is such that, when the FRP rebar 8 is present on the travel path, the fixed gripping member 41 of the gripping device 40 supported by the rotational drive device 50 comes into sliding contact with the FRP rebar 8 on the inner surface (the gripping surface) of the groove 42, and the FRP rebar 8 passes through the through holes 56, 54, and 52 of the rotational drive device 50 (the attachment plate 55, the rotating shaft 53, and the housing 51).

Further, a through hole 73 for inserting (passing through) the FRP rebar 8 is formed also in the portion 72 on the other end side of the support bracket 70, as in the rotational drive device 50. The through hole 73 is formed at the same position as the through hole 52 of the housing 51 of the rotational drive device 50 when viewed in the drawing direction, and is also formed to have the same size as that of the through hole 52 of the housing 51.

Note that, with respect to each drawing mechanism 30, each component is configured and arranged as described above, and therefore, during formation of the FRP rebar 8 described below, the FRP rebar 8 is inserted into each of the through holes 56, 54, 52, and 73 of the rotational drive device 50 (the attachment plate 55, the rotating shaft 53, and the housing 51) and the reciprocating drive device 60 (the support bracket 70). In addition, in this state, the FRP rebar 8 is in sliding contact with the inner surface (the gripping surface) of the groove 42 of the fixed gripping member 41 of the gripping device 40. In other words, approximately half of the FRP rebar 8 is accommodated in the groove 42 of the fixed gripping member 41 of the gripping device 40. As a result, displacement of the FRP rebar 8 in a width direction of the groove 42 of the fixed gripping member 41 of the gripping device 40 is regulated.

In addition, with respect to the reciprocating drive device 60, the reciprocating drive device 60, as described above, reciprocates the rotational drive device 50 (and the gripping device 40 supported by the rotational drive device 50) along the drawing direction, but the driving is performed by rotational driving of the screw shaft 64 by the servo motor M2 of the ball-screw mechanism 61. Specifically, as the servo motor M2 is driven to rotationally drive the screw shaft 64 in the forward and reverse directions, the base member 66 is driven to advance and retract along the drawing direction. As the base member 66 is driven to advance and retract in such a manner, the rotational drive device 50 (and the gripping device 40) supported by the support bracket 70 on the base member 66 is reciprocated along the drawing direction.

In addition, driving of the ball-screw mechanism 61 (the servo motor M2) is controlled such that the base member 66 is reciprocated between two predetermined positions. With respect to the two positions between which the base member 66 is reciprocated, when movement from an upstream side toward a downstream side in the drawing direction is defined as a forward movement and movement from the downstream side toward the upstream side is defined as a backward movement, a position at which the forward movement is started (a forward movement start position) is set at a position at which the base member 66 is close to the upstream-side support member 62. In addition, a position at which the forward movement is ended, that is, a position at which the backward movement is started (a backward movement start position), is set at a position at which the base member 66 is close to the downstream-side support member 63 (a position shown in FIG. 3).

In addition, with respect to the gripping device 40, driving of the gripping member drive device 44 (the air cylinder 45) that drives the movable gripping member 43 to advance and retract is controlled such that the forward movement of the base member 66 is performed in a state in which the FRP rebar 8 is gripped (a gripping state). However, with respect to the gripping of the FRP rebar 8 during the forward movement, the driving of the gripping member drive device 44 is controlled such that the gripping is not started simultaneously with the start of the forward movement of the base member 66, but is started when a moving speed of the base member 66 reaches a predetermined drawing speed of the FRP rebar 8. In addition, the driving of the gripping member drive device 44 is controlled such that, during the backward movement of the base member 66, the gripping of the FRP rebar 8 is released (a non-gripping state), that is, the movable gripping member 43 is positioned at the standby position.

In addition, with respect to the rotational drive device 50, the rotating shaft 53 is rotationally driven as the servo motor M1 connected to the rotating shaft 53 is driven. As the rotating shaft 53 is rotationally driven in this manner, the gripping device 40 attached to the rotating shaft 53 via the attachment plate 55 is rotationally driven, when viewed in the drawing direction, with the center of the arc of the groove 42 of the fixed gripping member 41 (the center of the FRP rebar 8 accommodated in the groove 42) as a rotation center. In addition, the driving of the servo motor M1 of the rotational drive device 50 is controlled to be performed over a period during which the gripping device 40 is in the gripping state.
When the gripping device 40 in the gripping state is rotationally driven by the rotational drive device 50, rotation is imparted to the FRP rebar 8. In addition, the rotational drive is controlled such that the FRP rebar 8 is rotationally driven for a predetermined number of times (such that the reinforcing fiber bundles 7 are twisted on the upstream side) during the period in which the gripping device 40 is in the gripping state.

In the drawing-and-twisting device 3 configured as described above, when the rotational drive device 50 rotationally drives the gripping device 40 in the above-described manner and the reciprocating drive device 60 drives the base member 66 supporting the gripping device 40 (the rotational drive device 50) forward, the FRP rebar 8 is pulled and moved in the drawing direction while being imparted with rotation as described above. As the FRP rebar 8 is pulled and moved while being imparted with rotation, in the impregnation device 2 on the upstream side of the drawing-and-twisting device 3, the plurality of reinforcing fiber bundles 7 are pulled while being imparted with twisting (while being twisted).

In addition, in the drawing-and-twisting device 3, the driving of the reciprocating drive device 60 (the servo motor M2 of the ball-screw mechanism 61) is controlled such that, when the base member 66 reaches a forward movement limit, i.e., the backward movement start position, the forward movement is stopped and the backward movement driving of the base member 66 is started. However, during the backward movement of the base member 66, as described above, the gripping device 40 (the gripping member drive device 44) is in the non-gripping state. As a result, the backward movement is performed without the gripping device 40 interfering with the FRP rebar 8.

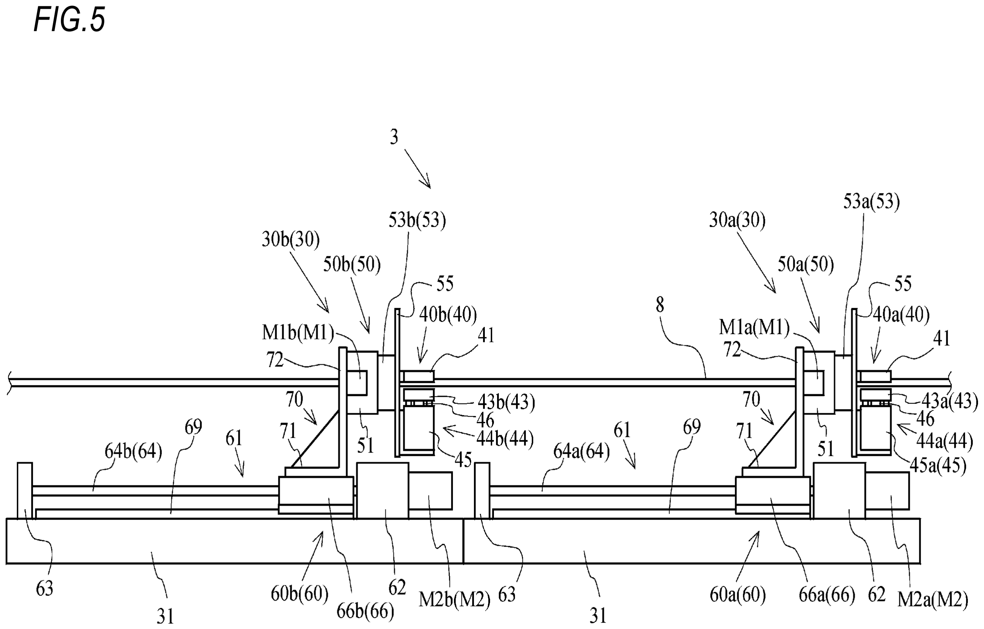

With respect to the drawing-and-twisting device 3 including the drawing mechanism 30 described above, in the present embodiment, as described above, the drawing-and-twisting device 3 includes two drawing mechanisms. More specifically, as shown in FIG. 5, the drawing-and-twisting device 3 includes a first drawing mechanism 30a and a second drawing mechanism 30b aligned in the drawing direction, the first drawing mechanism 30a including a gripping device 40a, a rotational drive device 50a, and a reciprocating drive device 60a, and the second drawing mechanism 30b including a gripping device 40b, a rotational drive device 50b, and a reciprocating drive device 60b.

In addition, in the present embodiment, driving of both drawing mechanisms 30a and 30b is performed such that pulling movement of the FRP rebar 8 by the two drawing mechanisms 30a and 30b is continuous (so as not to stop the FRP rebar 8). Specifically, after pulling movement of the FRP rebar 8 accompanied by rotation by the first drawing mechanism 30a as described above is started, forward movement of the base member 66b in the second drawing mechanism 30b is started before forward movement of the base member 66a is ended. Then, after a moving speed of the base member 66b reaches a predetermined drawing speed of the FRP rebar 8 (after the gripping device 40b is brought into the gripping state), in the first drawing mechanism 30a, the gripping device 40a is brought into the non-gripping state and forward movement of the base member 66a is ended. Thereafter, before forward movement of the base member 66b in the second drawing mechanism 30b is ended, forward movement of the base member 66a in the first drawing mechanism 30a is started, and thereafter, this is repeated.

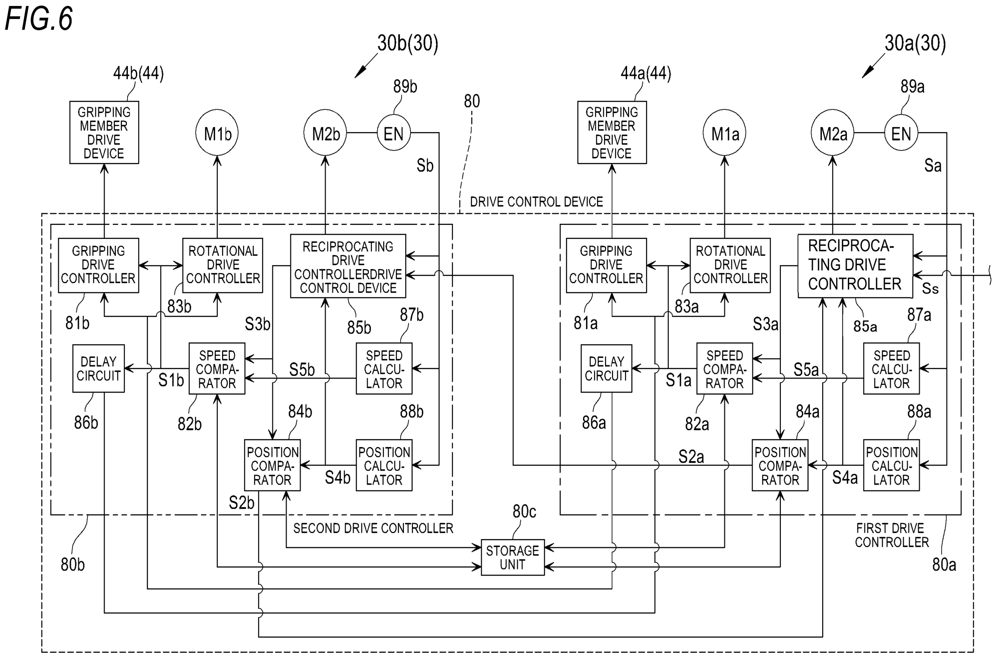

Control of driving of both drawing mechanisms 30a and 30b is executed by a drive control device 80 shown in FIG. 6. With respect to the drive control device 80, specifically, the drive control device 80 is configured to include a first drive controller 80a that controls driving of the first drawing mechanism 30a, and a second drive controller 80b that controls driving of the second drawing mechanism 30b. Further, the drive control device 80 includes a storage unit 80c in which set values used for driving the gripping member drive device 44a, the rotational drive device 50a, and the reciprocating drive device 60a of the first drawing mechanism 30a, and the gripping member drive device 44b, the rotational drive device 50b, and the reciprocating drive device 60b of the second drawing mechanism 30b are stored.

In addition, the first drive controller 80a is configured to include a gripping drive controller 81a that controls driving of the gripping member drive device 44a (the air cylinder 45a) of the gripping device 40a, a rotational drive controller 83a that controls driving of the servo motor M1a of the rotational drive device 50a, and a reciprocating drive controller 85a that controls driving of the servo motor M2a of the reciprocating drive device 60a. Similarly, the second drive controller 80b is also configured to include a gripping drive controller 81b, a rotational drive controller 83b, and a reciprocating drive controller 85b.

Note that, encoders 89a and 89b that output signals Sa and Sb in accordance with an amount of rotation of output shafts of the servo motors M2a and M2b are connected to the servo motor M2a of the reciprocating drive device 60a and the servo motor M2b of the reciprocating drive device 60b, respectively. Further, the first and second drive controllers 80a and 80b include speed calculators 87a and 87b that calculate moving speeds of the base members 66a and 66b from the signals Sa and Sb from the encoders 89a and 89b and output speed signals S5a and S5b corresponding to the calculated moving speeds. Further, the first and second drive controllers 80a and 80b include position calculators 88a and 88b that calculate positions of the base members 66a and 66b in the drawing direction from the signals Sa and Sb (movement amounts with the forward movement start position as an origin; hereinafter referred to as "moving positions") and output position signals S4a and S4b corresponding to the calculated moving positions.

In addition, the first and second drive controllers 80a and 80b include speed comparators 82a and 82b that are connected to the speed calculators 87a and 87b and to which the speed signals S5a and S5b are output from the speed calculators 87a and 87b. Further, the first and second drive controllers 80a and 80b include position comparators 84a and 84b that are connected to the position calculators 88a and 88b and to which the position signals S4a and S4b are output from the position calculators 88a and 88b. The speed comparators 82a and 82b and the position comparators 84a and 84b are each connected to the storage unit 80c.

In the storage unit 80c, a set value (speed set value) related to the moving speed is stored, the set value being set to a drawing speed of the FRP rebar 8 that is predetermined as a desired speed. Further, in the storage unit 80c, as a set value related to the moving position, a set value (a forward movement command position set value) set to a position before a forward movement end position (the backward movement start position) with respect to the forward movement start position is stored such that forward movement of one of the base member 66a of the first drawing mechanism 30a and the base member 66b of the second drawing mechanism 30b is started before forward movement of the other is ended (before reaching a position at which the forward movement is ended).

Further, the speed comparators 82a and 82b are configured to compare the moving speed indicated by the speed signals S5a and S5b from the speed calculators 87a and 87b with the speed set value, and to output operation command signals S1a and S1b at a time when the two match. In addition, the position comparators 84a and 84b are configured to compare the moving position indicated by the position signals S4a and S4b from the position calculators 88a and 88b with the forward movement command position set value, and to output forward movement command signals S2a and S2b at a time when the two match.

Note that the reciprocating drive controllers 85a and 85b are connected to the speed comparators 82a and 82b and the position comparators 84a and 84b, respectively. In addition, the reciprocating drive controllers 85a and 85b are configured to output forward rotation drive signals S3a and S3b while control for driving the base members 66a and 66b forward is being executed, that is, while control for driving the servo motors M2a and M2b so as to rotationally drive the screw shafts 64a and 64b in the forward direction is being executed. In addition, the forward rotation drive signals S3a and S3b from the reciprocating drive controllers 85a and 85b are output to the speed comparators 82a and 82b and the position comparators 84a and 84b. The speed comparators 82a and 82b and the position comparators 84a and 84b are configured to perform the comparison on the condition that the forward rotation drive signals S3a and S3b from the reciprocating drive controllers 85a and 85b are input (that is, the base members 66a and 66b are being driven forward).

In addition, the speed comparators 82a and 82b are connected to the gripping drive controllers 81a and 81b and the rotational drive controllers 83a and 83b. As a result, the operation command signals S1a and S1b from the speed comparators 82a and 82b are output to the gripping drive controllers 81a and 81b and the rotational drive controllers 83a and 83b.

The gripping drive controllers 81a and 81b are configured to start control for causing the gripping devices 40a and 40b to perform a gripping operation of the FRP rebar 8 (advance driving of the movable gripping members 43a and 43b), in association with the output of the operation command signals S1a and S1b from the speed comparators 82a and 82b. In addition, the rotational drive controllers 83a and 83b are configured to start control for causing the rotational drive devices 50a and 50b to perform a rotational operation of the gripping devices 40a and 40b (rotational driving of the rotating shafts 53a and 53b), in association with the output of the operation command signals S1a and S1b from the speed comparators 82a and 82b.

In addition, the speed comparator 82a of the first drive controller 80a is also connected to the gripping drive controller 81b and the rotational drive controller 83b of the second drive controller 80b. As a result, the operation command signal S1a from the speed comparator 82a is also output to the gripping drive controller 81b and the rotational drive controller 83b of the second drive controller 80b. Similarly, the speed comparator 82b of the second drive controller 80b is also connected to the gripping drive controller 81a and the rotational drive controller 83a of the first drive controller 80a, and the operation command signal S1b thereof is also output to the gripping drive controller 81a and the rotational drive controller 83a.

In addition, the gripping drive controllers 81a and 81b in the respective drive controllers of the first drive controller 80a and the second drive controller 80b are configured to start control for causing the gripping device 40 of the drawing mechanism 30 to perform an operation for releasing gripping of the FRP rebar 8 (retraction driving of the movable gripping member 43), in association with the input of the operation command signals S1b and S1a from the speed comparators 82b and 82a of the other drive controllers. In addition, the rotational drive controllers 83a and 83b are configured to start control for causing the rotational drive device 50 of the drawing mechanism 30 to perform an operation for stopping rotation of the gripping device 40 (stopping of rotational driving of the rotating shaft 53), in association with the input of the operation command signals S1b and S1a from the speed comparators 82b and 82a of the other drive controllers.

In this manner, the gripping drive controllers 81a and 81b in the respective drive controllers 80a and 80b are configured to start the control (gripping control) for causing the gripping devices 40a and 40b of the drawing mechanisms 30a and 30b to grip the FRP rebar 8, in association with the output of the operation command signals S1a and S1b from the speed comparators 82a and 82b of the drive controllers including the gripping drive controllers themselves, and to execute the control (gripping release control) for causing the gripping devices 40a and 40b to release gripping of the FRP rebar 8, in association with the output of the operation command signals S1b and S1a from the speed comparators 82b and 82a of the other drive controllers (with gripping of the FRP rebar 8 by the gripping devices 40b and 40a of the other drawing mechanisms 30b and 30a being started).

In addition, the rotational drive controllers 83a and 83b in the respective drive controllers 80a and 80b are configured, as described above, to start the control (rotation control) for causing the rotational drive devices 50a and 50b of the drawing mechanisms 30a and 30b to rotationally drive the gripping devices 40a and 40b, in association with the output of the operation command signals S1a and S1b from the speed comparators 82a and 82b of the drive controllers including the rotational drive controllers themselves, and to execute the control (rotation stop control) for causing the rotational drive devices 50a and 50b to stop rotational driving of the gripping devices 40a and 40b, in association with the output of the operation command signals S1b and S1a from the speed comparators 82b and 82a of the other drive controllers (with rotational driving of the gripping devices 40b and 40a by the rotational drive devices 50b and 50a of the other drawing mechanisms 30b and 30a being started).

In addition, the position comparator 84a of the first drive controller 80a is connected to the reciprocating drive controller 85b of the second drive controller 80b. As a result, the forward movement command signal S2a from the position comparator 84a is output to the reciprocating drive controller 85b of the second drive controller 80b. Similarly, the position comparator 84b of the second drive controller 80b is connected to the reciprocating drive controller 85a of the first drive controller 80a, and the forward movement command signal S2b from the position comparator 84b is output to the reciprocating drive controller 85a.

In addition, the reciprocating drive controllers 85a and 85b in the respective drive controllers of the first drive controller 80a and the second drive controller 80b are configured to start control for causing the reciprocating drive device 60 (the servo motor M2) of the drawing mechanism 30 to perform a forward movement operation of the base member 66 (rotational driving of the screw shaft 64 in the forward direction), in association with the input of the forward movement command signals S2b and S2a from the position comparators 84b and 84a of the other drive controllers. Note that the time point at which the forward movement command signals S2b and S2a are output from the respective position comparators 84b and 84a is, as described above, a time point at which the base members 66b and 66a reach positions set before the forward movement end position. Accordingly, the time point at which the reciprocating drive controllers 85a and 85b in the respective drive control devices 80a and 80b start the control (forward movement control) for causing the reciprocating drive devices 60a and 60b to perform the forward movement operation, that is, the time point at which forward movement of the base members 66a and 66b in the respective drawing mechanisms 30a and 30b is started, is earlier than the time point at which forward movement of the base members 66b and 66a in the other drawing mechanisms 30b and 30a is ended.

In addition, in the FRP rebar forming apparatus 1, when the drawing operation of the FRP rebar 8 is to be started in the drawing-and-twisting device 3, an operation start switch (not shown) is operated. In association therewith, an operation start command signal Ss is generated, and the operation start command signal Ss is input to the reciprocating drive controller 85a of the first drive controller 80a. The reciprocating drive controller 85a is configured to start the forward movement control also upon input of the operation start command signal Ss, in the same manner as upon input of the forward movement command signal S2b.

In addition, the reciprocating drive controllers 85a and 85b are also connected to the position calculators 88a and 88b in the respective drive controllers. As a result, the position signals S4a and S4b are output from the position calculators 88a and 88b to the reciprocating drive controllers 85a and 85b. In addition, in each of the reciprocating drive controllers 85a and 85b, it is assumed that the forward movement start position (the backward movement end position) is stored as an origin, and the forward movement end position (the backward movement start position) is stored as a distance from the origin.

The reciprocating drive controller 85a of the first drive controller 80a is configured to, after starting the above-described forward movement control in association with generation of the operation start command signal Ss or the forward movement command signal S2b as described above, monitor the moving position indicated by the position signal S4a from the position calculator 88a, and execute control for stopping the base member 66a at the forward movement end position based on the moving position and the stored forward movement end position (the backward movement start position). In addition, the reciprocating drive controller 85a is configured to, based on completion of the stopping control, start control for driving the base member 66a backward, that is, control (backward movement control) for causing the reciprocating drive device 60a to perform a backward movement operation of the base member 66a (a return operation for returning the base member 66a to the forward movement start position, which is the initial position). Further, after starting the backward movement control, the reciprocating drive controller 85a is configured to execute control such that the backward movement is stopped when the base member 66a reaches the forward movement start position (the backward movement end position), based on the moving position and the stored origin.

Similarly, the reciprocating drive controller 85b of the second drive controller 80b is configured to, after starting the forward movement control in association with generation of the forward movement command signal S2a as described above, execute control for stopping the base member 66b at the forward movement end position based on the moving position and the stored forward movement end position. Further, the reciprocating drive controller 85b is configured to, based on completion of the stopping control, start backward movement control for driving the base member 66b backward (control for causing the reciprocating drive device 60b to perform a backward movement operation of the base member 66b), and execute control such that the backward movement is stopped when the base member 66b reaches the forward movement start position, based on the moving position and the stored origin.

In the FRP rebar forming apparatus 1 described above, when starting the drawing operation of the FRP rebar 8 by the drawing-and-twisting device 3, first, the operation start switch is operated. In association therewith, an operation start command signal Ss is generated, and the operation start command signal Ss is input to the reciprocating drive controller 85a of the first drive controller 80a. Then, the reciprocating drive controller 85a starts the above-described forward movement control for the reciprocating drive device 60a of the first drawing mechanism 30a in association with the input of the operation start command signal Ss. As a result, forward movement of the base member 66a in the reciprocating drive device 60a is started.

In addition, in the first drive controller 80a, while the forward movement control is being executed (while the base member 66a is moving forward), as described above, comparison between the moving speed of the base member 66a and the speed set value is performed in the speed comparator 82a. Then, when the moving speed matches the speed set value, the speed comparator 82a outputs an operation command signal S1a to the gripping drive controller 81a and the rotational drive controller 83a.

In association with the input of the operation command signal S1a, the gripping drive controller 81a starts the gripping control for the gripping device 40a of the first drawing mechanism 30a. In addition, in association with the input of the operation command signal S1a, the rotational drive controller 83a starts the rotation control for the rotational drive device 50a of the first drawing mechanism 30a. As a result, when the forward movement speed of the base member 66a reaches the drawing speed, gripping of the FRP rebar 8 by the gripping device 40a is started, and rotation of the gripping device 40a by the rotational drive device 50a is started. As a result, pulling and moving of the FRP rebar 8 accompanied by rotation by the first drawing mechanism 30a (the drawing operation of the FRP rebar 8 by the drawing-and-twisting device 3) is started.

Note that the operation command signal S1a from the speed comparator 82a of the first drive controller 80a is also output to the gripping drive controller 81b and the rotational drive controller 83b of the second drive controller 80b. However, at the time when the operation command signal S1a is generated immediately after start of the above-described forward movement control in the first drive controller 80a by the operation start command signal Ss (the time when, after start of operation of the drawing-and-twisting device 3, the forward movement speed of the base member 66a in the first drawing mechanism 30a first reaches the drawing speed), a forward movement command signal S2a for driving the base member 66b forward in the reciprocating drive device 60b of the second drawing mechanism 30b has not yet been generated, and forward movement of the base member 66b in the second drawing mechanism 30b has not been started. Accordingly, in the second drawing mechanism 30b, the gripping device 40b and the rotational drive device 50b also remain in a stopped state. Therefore, even when the operation command signal S1a for stopping operations of the gripping device 40b and the rotational drive device 50b is input to the gripping drive controller 81b and the rotational drive controller 83b of the second drive controller 80b, the respective states of the gripping device 40b and the rotational drive device 50b do not change (i.e., remain in the stopped state).

Thereafter, in the first drive controller 80a, while the base member 66a is moving forward, as described above, comparison between the moving position of the base member 66a and the forward movement command position set value is performed by the position comparator 84a. Then, when the moving position matches the forward movement command position set value, that is, when the base member 66a reaches a predetermined position set before the forward movement end position, the position comparator 84a outputs the forward movement command signal S2a to the reciprocating drive controller 85b of the second drive controller 80b. As a result, in the second drive controller 80b, in association with the input of the forward movement command signal S2a, the reciprocating drive controller 85b starts the forward movement control for the reciprocating drive device 60b of the second drawing mechanism 30b. As a result, forward movement of the base member 66b in the second drawing mechanism 30b is started before the base member 66a in the first drawing mechanism 30a reaches the forward movement end position (before it stops).

In addition, while the base member 66b in the second drawing mechanism 30b is moving forward, also in the second drive controller 80b, the speed comparator 82b performs comparison between the moving speed of the base member 66b and the speed set value, and outputs an operation command signal S1b to the gripping drive controller 81b and the rotational drive controller 83b of the second drive controller 80b at a time when the two match. As a result, the gripping drive controller 81b and the rotational drive controller 83b start the gripping control for the gripping device 40b of the second drawing mechanism 30b and the rotation control for the rotational drive device 50b. That is, also in the second drawing mechanism 30b, from the time point at which the forward movement speed of the base member 66b reaches the drawing speed, gripping of the FRP rebar 8 by the gripping device 40b and rotation of the gripping device 40b by the rotational drive device 50b are started, and pulling and moving of the FRP rebar 8 accompanied by rotation by the second drawing mechanism 30b is started.

In addition, the operation command signal S1b from the speed comparator 82b of the second drive controller 80b is also output to the gripping drive controller 81a and the rotational drive controller 83a of the first drive controller 80a. In association therewith, in the first drive controller 80a, the gripping release control by the gripping drive controller 81a (control for causing the gripping device 40a to release gripping of the FRP rebar 8) is executed, and the rotation stop control by the rotational drive controller 83a (control for causing the rotational drive device 50a to stop rotational driving of the gripping device 40a) is executed.

However, in the drive control device 80, a delay circuit 86b is provided between the speed comparator 82b and the gripping drive controller 81a and rotational drive controller 83a. As a result, the operation command signal S1b is input to the gripping drive controller 81a and the rotational drive controller 83a with a slight time delay relative to a time point at which the operation command signal S1b is input to the gripping drive controller 81b and the rotational drive controller 83b. As a result, release of gripping of the FRP rebar 8 by the gripping device 40a and stopping of rotation of the gripping device 40a in the first drawing mechanism 30a, which has been performing pulling and moving accompanied by rotation of the FRP rebar 8, are performed after gripping of the FRP rebar 8 by the gripping device 40b and rotation of the gripping device 40b in the second drawing mechanism 30b are started. That is, release of gripping of the FRP rebar 8 by the gripping device 40a in the first drawing mechanism 30a is performed after a time point at which gripping of the FRP rebar 8 in the second drawing mechanism 30b is completed. As a result, in the FRP rebar forming apparatus 1, a state in which the FRP rebar 8 is gripped by the gripping device 40a or 40b is maintained in either one of the drawing mechanisms 30a and 30b.

Thereafter, in the first drive controller 80a, the reciprocating drive controller 85a monitors the moving position of the base member 66a based on the position signal S4a from the position calculator 88a, and executes control for stopping the base member 66a at the forward movement end position based on the moving position and the stored forward movement end position. Further, the reciprocating drive controller 85a starts the backward movement control (control for driving the base member 66a backward) based on completion of the stopping control. As a result, in the first drawing mechanism 30a, the base member 66a moves forward to the set forward movement end position and is stopped, and subsequently starts backward movement.

Subsequently, in the first drive controller 80a, during the backward movement, the reciprocating drive controller 85a, in the same manner as during the forward movement, monitors the moving position of the base member 66a based on the position signal S4a from the position calculator 88a, and executes control for stopping the base member 66a at the backward movement end position based on the moving position and the stored backward movement end position. As a result, in the first drawing mechanism 30a, the base member 66a is positioned at the backward movement end position (the forward movement start position).

Note that, also during the backward movement, the position signal S4a from the position calculator 88a is output to the position comparator 84a. However, as described above, comparison by the position comparator 84a between the moving position of the base member 66a and the forward movement command position set value is performed on the condition that the forward rotation drive signal S3a output from the reciprocating drive controller 85a during forward movement is input. Therefore, during the backward movement, such comparison is not performed. Accordingly, even when the base member 66a passes through a position corresponding to the forward movement command position set value during the backward movement, the position comparator 84a does not output the forward movement command signal S2a. Similarly, also in the speed comparator 82a, the speed signal S5a from the speed calculator 87a is input; however, since the forward rotation drive signal S3a is not generated, comparison between the moving speed of the base member 66a and the speed set value is not performed. Accordingly, even when the base member 66a reaches a moving speed matching the speed set value after the backward movement has started, the speed comparator 82a does not output the operation command signal S1a.

Also during forward movement of the base member 66b in the second drawing mechanism 30b (that is, during pulling movement of the FRP rebar 8 accompanied by rotation), in the second drive controller 80b, the position comparator 84b performs comparison between the moving position of the base member 66b and the forward movement command position set value, and outputs a forward movement command signal S2b to the reciprocating drive controller 85a of the first drive controller 80a at a time when the two match. Note that, the moving speed during backward movement of the base member 66a in the first drawing mechanism 30a is set such that the base member 66a reaches the backward movement end position before the time point at which the base member 66b in the second drawing mechanism 30b reaches the position corresponding to the forward movement command position set value (the time point at which the forward movement command signal S2b is output). Accordingly, at the time point at which the forward movement command signal S2b is output as described above, in the first drawing mechanism 30a, the base member 66a is positioned at the backward movement end position, which is the initial position.

Then, in association with the output of the forward movement command signal S2b from the position comparator 84b of the second drive controller 80b, in the first drawing mechanism 30a, forward movement of the base member 66a by the reciprocating drive controller 85a is started, in the same manner as when the operation start command signal Ss is input to the first drive controller 80a (the reciprocating drive controller 85a). Thereafter, the respective controls in the first drive controller 80a as described above are executed, and pulling movement of the FRP rebar 8 accompanied by rotation by the first drawing mechanism 30a is performed.

In addition, also during forward movement of the base member 66a in the first drawing mechanism 30a based on the forward movement command signal S2b (during the pulling movement), when the forward movement speed of the base member 66a matches the speed set value, the operation command signal S1a is output from the speed comparator 82a of the first drive controller 80a to the gripping drive controller 81b and the rotational drive controller 83b of the second drive controller 80b. However, unlike the forward movement based on the operation start command signal Ss, at that time, the gripping operation of the FRP rebar 8 by the gripping device 40b of the second drawing mechanism 30b and the rotational operation of the gripping device 40b are performed. Therefore, in association with the input of the operation command signal S1a to the second drive controller 80b (the gripping drive controller 81b and the rotational drive controller 83b), in the second drawing mechanism 30b, release of gripping of the FRP rebar 8 by the gripping device 40b and stopping of rotation of the gripping device 40b are performed, as in the case where the operation command signal S1b is input to the first drive controller 80a (the gripping drive controller 81a and the rotational drive controller 83a).

Additionally, in the drive control device 80, a delay circuit 86a is also provided between the speed comparator 82a and the gripping drive controller 81b and rotational drive controller 83b. As a result, release of gripping of the FRP rebar 8 by the gripping device 40b in the second drawing mechanism 30b and stopping of rotation of the gripping device 40b are also performed after gripping of the FRP rebar 8 by the gripping device 40a in the first drawing mechanism 30a and rotation of the gripping device 40a are started.

Thereafter, also in the second drive controller 80b, the stopping control for stopping the base member 66b of the second drawing mechanism 30b at the forward movement end position by the reciprocating drive controller 85b, and the backward movement control after stopping of forward movement of the base member 66b are executed, and the base member 66b is positioned at the backward movement end position, which is the initial position. Note that the backward movement of the base member 66b is also performed at a moving speed set such that the base member 66b reaches the backward movement end position before a time point at which the base member 66a of the first drawing mechanism 30a reaches a position corresponding to the forward movement command position set value (a time point of output of the forward movement command signal S2a). In addition, also during the backward movement, comparison between the moving position of the base member 66b and the forward movement command position set value by the position comparator 84b of the second drive controller 80b and comparison between the moving speed of the base member 66b and the speed set value by the speed comparator 82b are not performed, and output of the forward movement command signal S2b by the position comparator 84b and output of the operation command signal S1b by the speed comparator 82b are not performed.

As described above, in the drawing-and-twisting device 3 of the FRP rebar forming apparatus 1, first, forward movement of the base member 66a in the first drawing mechanism 30a is started, and subsequently, pulling movement of the FRP rebar 8 accompanied by rotation by the first drawing mechanism 30a is started. Thereafter, before forward movement of the base member 66a in the first drawing mechanism 30a is ended, forward movement of the base member 66b in the second drawing mechanism 30b is started, and subsequently, pulling movement of the FRP rebar 8 accompanied by rotation by the second drawing mechanism 30b is started, while gripping of the FRP rebar 8 by the gripping device 40a in the first drawing mechanism 30a is released, and the pulling movement by the first drawing mechanism 30a is ended. Thereafter, before forward movement of the base member 66b in the second drawing mechanism 30b is ended, forward movement of the base member 66a in the first drawing mechanism 30a is started again. Thereafter, this series of operations is repeated.

In this manner, in the drawing-and-twisting device 3, the pulling movements (forward movement driving by the respective reciprocating drive devices 60a and 60b) by the first and second drawing mechanisms 30a and 30b are successively performed in the order of the first drawing mechanism 30a and the second drawing mechanism 30b (a predetermined order). As a result, drawing of the reinforcing fiber bundles 7 out of the resin tank 11 on the upstream side of the drawing-and-twisting device 3 is successively performed without stopping the FRP rebar 8.

Accordingly, according to the FRP rebar forming apparatus 1 in which drawing of the FRP rebar 8 (the reinforcing fiber bundles 7) is performed by such a drawing-and-twisting device 3, passage of the reinforcing fiber bundles 7 through the resin tank 11 is performed at a constant speed, and therefore the reinforcing fiber bundles 7 are uniformly impregnated with the thermoplastic resin. Furthermore, since the pulling movements by the first and second drawing mechanisms 30a and 30b are performed, there is no period during which the pulling movement is not performed by either of the drawing mechanisms 30. Accordingly, in the drawing-and-twisting device 3 (the FRP rebar forming apparatus 1), drawing of the FRP rebar 8 (the reinforcing fiber bundles 7) can be performed more efficiently as compared with an apparatus in which drawing of the FRP rebar is performed by only one drawing mechanism.

In addition, according to the drawing-and-twisting device 3 (FRP rebar forming apparatus 1), as described above, forward movement (of the base member 66 supporting the gripping device 40) is performed while rotating the gripping device 40 gripping the FRP rebar 8 in each drawing mechanism 30. Therefore, during the pulling movement by each drawing mechanism 30, no sliding occurs between the FRP rebar 8 and the gripping device 40 that directly grips the FRP rebar 8 in the rotational direction and the drawing direction. Accordingly, the drawing-and-twisting device 3 does not cause damage to the FRP rebar 8 (the reinforcing fiber bundles 7) due to sliding.

Note that the present invention is not limited to the embodiment described above, and can also be implemented in the following modified embodiments (1) to (7) (variations).
(1) With respect to the driving of each drawing mechanism in the drawing-and-twisting device, in the above embodiment, the driving of the first and second drawing mechanisms 30a and 30b is performed such that the pulling movement of the FRP rebar 8 (the drawing of the reinforcing fiber bundles 7) by both drawing mechanisms 30a and 30b is continuous (without stopping the FRP rebar 8). That is, in the above embodiment, the driving of each drawing mechanism 30 that performs an operation for pulling movement (pulling movement operation) in a predetermined order as described above is performed such that gripping of the FRP rebar 8 (and rotation of the gripping device 40) in the drawing mechanism 30 that next performs the pulling movement operation is started before release of gripping of the FRP rebar 8 (and stopping of rotation of the gripping device 40) in the drawing mechanism 30 that is performing the pulling movement operation. However, in the present invention, the driving of each drawing mechanism in the drawing-and-twisting device is not limited to that of the above embodiment, and may be performed such that the pulling movement of the FRP rebar by the drawing mechanism is intermittent.

Specifically, with respect to two drawing mechanisms that perform the pulling movement operation successively, driving of each drawing mechanism may be controlled such that, after release of gripping of the FRP rebar 8 (and stopping of rotation of the gripping device) in the drawing mechanism that first performs the pulling movement operation is completed, gripping of the FRP rebar 8 (and rotation of the gripping device) in the drawing mechanism that subsequently performs the pulling movement operation is started. Note that, in that case, in the above embodiment, release of gripping of the FRP rebar 8 (stopping of rotation of the gripping devices 40a and 40b) in each of the drawing mechanisms 30a and 30b is performed in association with the output of the operation command signal for starting gripping of the FRP rebar 8 (rotation of the gripping device) in the drawing mechanism that next performs the pulling movement operation. However, instead of this, for example, release of gripping may be performed in association with an output of a forward movement command signal for starting forward movement of the base member in the drawing mechanism that next performs the pulling movement operation.

(2) With respect to the gripping device for gripping the FRP rebar in each drawing mechanism, in the above embodiment, the gripping device 40 is configured to grip the FRP rebar 8 by the pair (two) of gripping members 41 and 43. However, in the present invention, the gripping device is not limited to such a configuration, and may be configured, for example, such that three or more gripping members provided so as to be aligned circumferentially around the travel path of the FRP rebar (the reinforcing fiber bundles) are respectively driven to advance and retract with respect to the travel path.

In addition, in the above embodiment, in the gripping device 40, the gripping member drive device 44 for advancing and retracting the gripping member 43 uses the air cylinder 45 as a driving means. However, in the gripping device of the present invention, the gripping member drive device for advancing and retracting the gripping member may use a hydraulic cylinder as a driving means. In addition, the gripping member drive device is not limited to one using a cylinder as a driving means as described above, and may use a drive motor such as a solenoid or a rotary motor.

(3) With respect to the rotational drive device for rotationally driving the gripping device in each drawing mechanism, in the above embodiment, the rotational drive device 50 has a configuration in which the attachment plate 55 to which the gripping device 40 is attached is supported by the housing 51 via the rotating shaft 53, the driving servo motor M1 is provided with the output shaft 58 oriented orthogonal to the rotating shaft 53, and the servo motor M1 (the output shaft 58) and the rotating shaft 53 are connected via the bevel gear. However, in the present invention, the rotational drive device is not limited to such a configuration, and may be configured, for example, such that a driving motor is provided for a rotating shaft that supports the attachment plate to which the gripping device is attached, with an orientation such that an output shaft of the driving motor is parallel to the rotating shaft, and the servo motor (the output shaft) and the rotating shaft are connected by gears (a gear train), or by a pulley and a timing belt.

(4) With respect to the reciprocating drive device for reciprocating the rotational drive device in each drawing mechanism along the drawing direction of the reinforcing fiber bundles, in the above embodiment, the drive mechanism 61 of the reciprocating drive device 60 for advancing and retracting the rotational drive device 50 along the drawing direction is configured by the ball-screw mechanism. However, in the reciprocating drive device of the present invention, the drive mechanism for advancing and retracting the rotational drive device along the drawing direction is not limited to such a configuration, and may be configured by a rack and pinion mechanism, for example, or may use a linear motor.

(5) With respect to the drawing-and-twisting device including the plurality of drawing mechanisms, in the above embodiment, the drawing-and-twisting device 3 is configured such that it includes two independent drawing mechanisms 30a and 30b, and the two drawing mechanisms 30a and 30b have the same configuration, that is, the gripping devices 40a and 40b, the rotational drive devices 50a and 50b, and the reciprocating drive devices 60a and 60b constituting the respective drawing mechanisms 30a and 30b have the same configuration.

However, in the present invention, the drawing-and-twisting device may be configured such that the plurality of drawing mechanisms have different configurations in part or in entirety, that is, at least one of the gripping device, the rotational drive device, and the reciprocating drive device constituting the drawing mechanism has a different configuration among the drawing mechanisms. Note that, in this case, with respect to the reciprocating drive device, for example, when the drive mechanism is configured by a ball-screw mechanism as in the above embodiment, a case where the components constituting the reciprocating drive device are the same but a length dimension of a screw shaft of the ball-screw mechanism and a length dimension of rails for guiding advance and retraction of a base member are different is also included. In such a case, in each drawing mechanism, a forward movement amount of the base member in the reciprocating drive device, that is, an amount by which the FRP rebar is pulled and moved in association with forward movement of the base member, is different.

In addition, in the above embodiment, the drawing-and-twisting device 3 is configured such that the reciprocating drive device 60 in each drawing mechanism 30 includes the pair of rails 69 and 69, that is, one pair of rails 69 and 69 is provided for each drawing mechanism 30 (the reciprocating drive device 60) (a number of pairs of rails corresponding to the number of drawing mechanisms is provided). However, with respect to the rails, only one pair of rails having a length dimension that encompasses forward movement ranges of the base members in all of the drawing mechanisms may be provided in common for the respective drawing mechanisms.

(6) With respect to the number of drawing mechanisms in the drawing-and-twisting device, in the above embodiment, the number of drawing mechanisms 30 is two. However, in the drawing-and-twisting device of the present invention, the number of drawing mechanisms may be three or more. Note that, in such a case, the order in which the pulling movement operations by the respective drawing mechanisms (the forward movement driving by the respective reciprocating drive devices) are performed (the "predetermined order" referred to in the present invention) may be any order as long as the order is set such that the drawing mechanisms that perform the pulling movement operation successively are different drawing mechanisms (that is, the pulling movement operation by the same drawing mechanism is not performed successively).

(7) With respect to the FRP rebar forming apparatus as recited in the preamble of the present invention, device configurations other than the drawing-and-twisting device that is a feature of the present invention, for example, a configuration of a device for supplying the respective reinforcing fiber bundles to the resin tank and a configuration of the resin tank, are not limited to those shown in the above embodiment, and may be based on other known configurations (devices).

The present invention is not limited to the above embodiment and the modified embodiments, and can be variously changed without departing from the gist of the present invention.

### REFERENCE SIGNS LIST

1: FRP rebar forming apparatus
2: impregnation device
3: drawing-and-twisting device
4: supply device
4a: material roll
5: cooling device
7: reinforcing fiber bundle
8: FRP rebar
9: thermoplastic resin
11: resin bath
21, 22: guide plate
23, 24: guide member
30: drawing mechanism
30a: first drawing mechanism
30b: second drawing mechanism
30h: insertion hole
31: support table
40, 40a, 40b: gripping device
41: gripping member (fixed gripping member)
42: groove
43, 43a, 43b: gripping member (movable gripping member)
44, 44a, 44b: gripping member drive device
45, 45a: air cylinder
46: piston rod
50, 50a, 50b: rotational drive device
51: housing
52, 52a, 52b: through hole
53, 53a, 53b: rotating shaft
54: through hole
55: attachment plate
56: through hole
58: output shaft
59: bracket
60, 60a, 60b: reciprocating drive device
61: ball-screw mechanism (drive mechanism)
62, 63: support member
64, 64a, 64b: screw shaft
66, 66a, 66b: base member
67: through hole
68: nut
69: rail
70: support bracket
71: portion on one end side
72: portion on other end side
73: through hole
80: drive control device
80a: first drive controller
80b: second drive controller
80c: storage unit
81a, 81b: gripping drive controller
82a, 82b: speed comparator
83a, 83b: rotational drive controller
84a, 84b: position comparator
85a, 85b: reciprocating drive controller
86a, 86b: delay circuit
87a, 87b: speed calculator
88a, 88b: position calculator
89a, 89b: encoder
Sa, Sb: signal
Ss: operation start command signal
S1a, S1b: operation command signal
S2a, S2b: forward movement command signal
S3a, S3b: forward rotation drive signal
S4a, S4b: position signal
S5a, S5b: speed signal
M1, M1a, M1b: servo motor
M2, M2a, M2b: servo motor

## Claims

1. An FRP rebar forming apparatus (1) for forming an FRP rebar (8) from a plurality of reinforcing fiber bundles (7), the FRP rebar forming apparatus comprising: a drawing-and-twisting device (3) configured to draw a plurality of reinforcing fiber bundles (7) impregnated with a thermoplastic resin in a resin bath (11) out of the resin bath while twisting the reinforcing fiber bundles; and a drive control device (80) configured to control driving of the drawing-and-twisting device,
**characterized in that**
the drawing-and-twisting device (3) includes a plurality of drawing mechanisms (30) aligned in a drawing direction of the reinforcing fiber bundles,
each of the drawing mechanisms (30) includes: a gripping device (40) configured to be switchable between a gripping state in which the FRP rebar (8) is gripped and a non-gripping state in which the gripping state is released; a rotational drive device (50) configured to support the gripping device and to rotationally drive the gripping device in a twisting direction of the reinforcing fiber bundles; and a reciprocating drive device (60) configured to reciprocate the rotational drive device along the drawing direction, and
the drive control device (80) is configured to control driving of each device in each of the drawing mechanisms (30) such that, when the gripping device (40) switched to the gripping state is rotationally driven by the rotational drive device (50), forward movement driving of the rotational drive device (50) by the reciprocating drive device (60) is performed, and to control driving of each of the reciprocating drive devices (60) such that forward movement driving by each of the reciprocating drive devices (60) is started in a predetermined order.
